# EUROPEAN PATENT APPLICATION

(11) **EP 0 579 965 A1**
(43) Date of publication of application: **26.01.1994**
(21) Application number: 93109921.2
(22) Date of filing: 22.06.1993
(51) Int. Cl.: F03G 3/00, F03G 7/10

(54) **Rotary engine with recycled power**

(30) Priority: 24.07.1992 IT GE920081
(71) Applicant: Rebolini, Giorgio, 29020 Zerba Piacenza (IT)
(72) Inventor: Rebolini, Giorgio, 29020 Zerba Piacenza (IT)

(57) **Abstract**

The invention relates to a rotary engine with recycled power in which the drive shaft (1) carries on identical arms with equal angular spacing one or more auxiliary rotors, half of the axle (5, 9) of each rotor being parallel to the shaft while the other half is inclined towards the shaft, the halves being held together by a central joint (4), each auxiliary rotor carrying two gears (8, 10) of different diameters engaging with the corresponding annuluses, one of which is movable, all the rotors being interconnected kinematically and engaging with the two annuluses in such a way that the rotation of the shaft (1) results from the motion of each rotor which is virtually equivalent to rolling along the internal surface of the annuluses, so that, as a result of the thrust force of the moving annulus and the return force of the fixed annulus, each rotor, resolving this conflict, rotates upon itself and, by moving translationally with respect to the annuluses, causes the drive shaft (1) to be put into axial rotation.

## Description

The invention relates to a rotary engine with recycled power in which the drive shaft carries on identical arms with equal angular spacing one or more auxiliary rotors, half of the axle of each rotor being parallel to the shaft while the other half is inclined towards the shaft, the halves being held together by a central joint, each auxiliary rotor carrying two gears of different diameters engaging with the corresponding annuluses, one of which is movable, all the rotors being interconnected kinematically and engaging with the two annuluses in such a way that the rotation of the shaft results from the motion of each rotor which is virtually equivalent to rolling along the internal surface of the annuluses, so that, as a result of the thrust force of the moving annulus and the return force of the fixed annulus, each rotor, resolving this conflict, rotates upon itself and, by moving translationally with respect to the annulus, causes the drive shaft to be put into axial rotation, the engine being of the type described in the previous patent No. 1228331 granted to the same holder.

The object of the invention is to provide an engine with recycled power which is of simpler construction, and which also yields a higher efficiency as a result of improved rotors.

The invention achieves the said object with an engine with recycled power of the type described initially, in which each rotor carries coaxially with the half-axle parallel to the shaft an annulus which con rotate together with the said half-axle, on which annulus are mounted a plurality of levers which can oscillate about axes parallel to the shaft, bear tangentially at different points on the inclined half-axle of the rotor, and are orientated so that they are inclined towards the free end of the said inclined half-axle, while the free end of each of the said levers engages with a bearing rotatable about an axis parallel to the shaft inside a ring whose axis is also parallel to the shaft, the rings linked with the levers of each rotor being connected in rotation to each other and to the shaft, in such a way that, as a result of the way in which each bearing bears on the internal surface of the ring, the forces are resolved into an active rotation force and a force cancelled by the engine, pushing the shaft into an inclined position, keeping it continuously engaged with the cylindrical part, and reducing its travel.

This improvement results in a constructional simplification which is easy to construct and maintain and an improvement of the benefits of the recycled-power engine which provides a new source of inexhaustible, clean and free power which is man-generated and avoids any form of pollution.

The invention also relates to other characteristics which further improve the engine described above and which form the subject of the subsidiary claims.

The particular characteristics of the invention and the advantages derived therefrom will be more clearly understood from the description of certain preferred embodiments illustrated by way of example and non-restrictively in the attached drawings, in which
Fig. 1 is a view of the rotor assembly of the engine according to the invention;
Fig. 2 is a side view of one lever;
Fig. 3 is a section of the lever along the line A-A;
Fig. 4 is a plan view of the lever according to Figures 3 and 4.
Fig. 5 is a schematic section of the cylindrical construction of a rotor;
Fig. 6 is a view similar to Fig. 5 in the operating position reached by leaving free the ring around the bearings on the levers and bending the upper part of the rotor axle towards the centre of the engine.

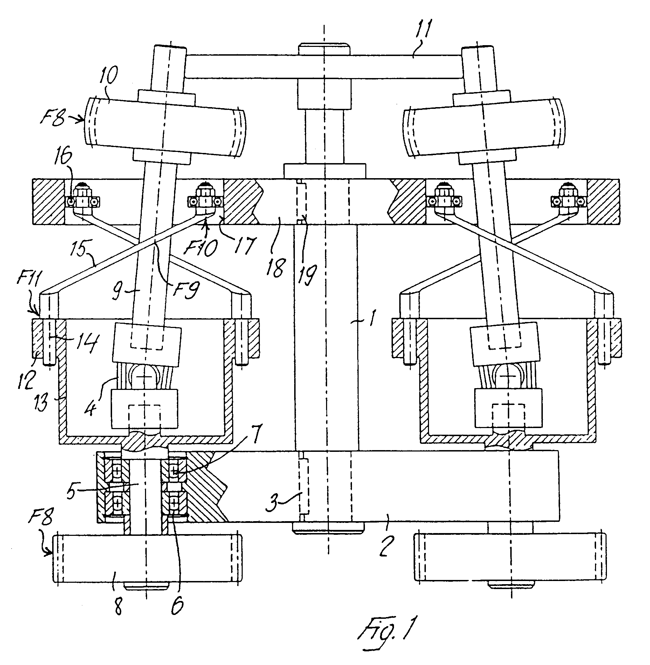

With reference to Fig. 1, the engine with recycled power according to the invention has a shaft 1 which carries on one end a support 2 connected to it by means of a key 3. The support 2 carries a plurality of rotors distributed symmetrically about the shaft 1, each rotor consisting of two parts which are connected together by a universal joint 4. The lower part of each rotor consists of a shaft section 5 which is mounted parallel to the shaft 1 and which is rotatable in bearings 6, 7. The lower end of the shaft section 5 carries a gear wheel 8 which is designed to engage with a fixed annulus (not shown in detail).

The shaft section 5 is connected by means of the universal joint 4 to a second shaft section 9 which carries at its end a convex gear wheel 10 designed to engage with an annulus which is also not shown and whose diameter is less than that of the first annulus. The ratio between the number of teeth of the gears 8 and of the associated annulus is equal to the ratio between the number of teeth of the gear 10 and of the corresponding annulus, so that both the annulus-cum-gear sets can move at the same rate.

The end of the second shaft section 9 bears against the peripheral edge of a conical discoid member 11 carried by the shaft 1.

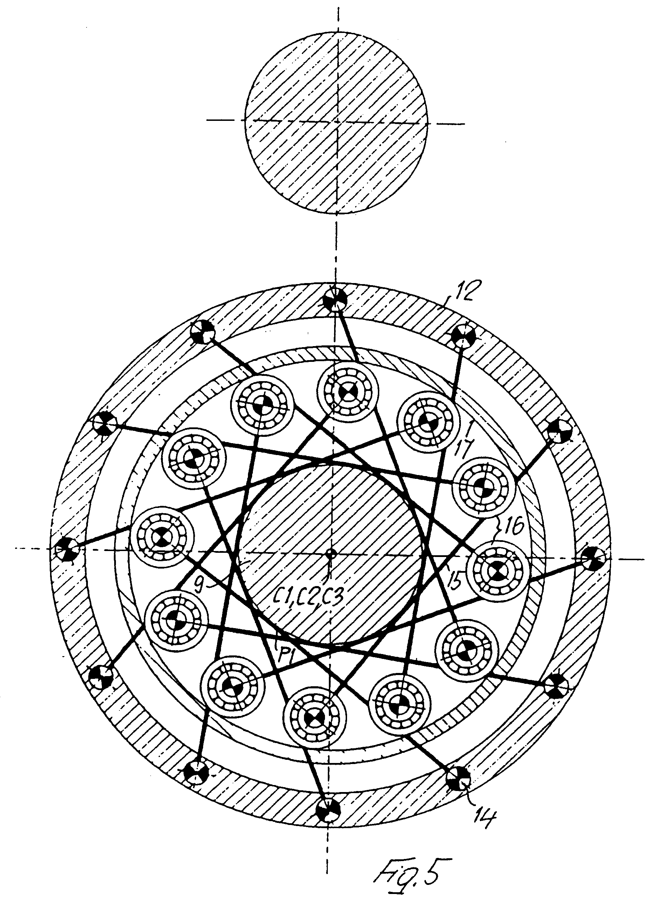

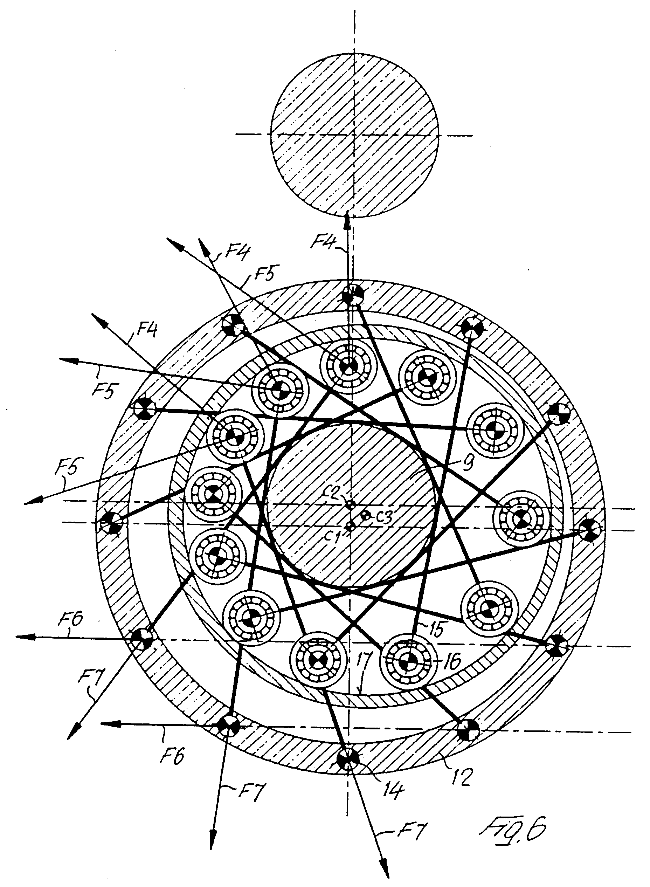

Each shaft section 5 carries an annulus 12 which is provided at the upper end of a cup-shaped support 13. The pins 14 of a plurality of levers 15 distributed angularly on the annulus 12 are engaged in the annulus 12 in such a way that they can oscillate about an axis parallel to the shaft 1. The levers 15 extend with a transverse inclination towards the upper end of the shaft section 9. At their opposite ends they carry bearings 16 which rotate about an axis parallel to the shaft 1, with which they engage with the interior of a ring 17, bearing against the inner surface of the ring so that they roll along the said inner surface. The rings 17 are carried by a support 18 which is fixed to the shaft 1 by means of a key 19. As may be seen in particular from Figs. 5 and 6, each lever 15 tangentially grips the external surface of the shaft section 9 at P1.

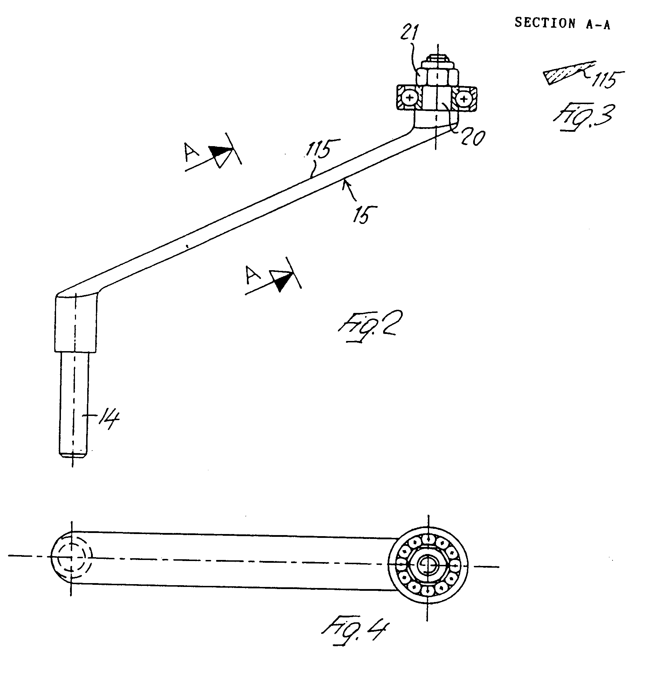

From Figs. 2 to 4 it is possible to understand more clearly the construction of the levers 15, each of which comprises the inclined section 115, the pin 14 and the parallel supporting axle 20 of the bearing 16 which is fixed to this support with locking means 21, for example a nut or similar. In transverse section, the inclined part 115 of the levers 15 has a wedge shape which tapers in the direction of the shaft section 9 with which it interacts.

The operation of the rotor according to the invention will be clearly understood from Figs. 5 and 6.

Fig. 5 shows the cylindrical coaxial condition with lever arms acting on the shaft section 9 of the levers 15 which are all identical.

Fig. 6 shows the operating position as in Fig. 6, in which the ring 17 around the bearings 16 is left free and the shaft section 9 is inclined towards the drive shaft 1 and the corresponding forces present. This is demonstrated by the centre of the annulus 12 supporting the levers 15, shown by C1, the centre of the inclined shaft, shown by C2, and the centre of the ring 17 on which the bearings 16 roll, shown by C3, these centres not coinciding with each other.

During each cycle, each lever obstructs part of the travel of the shaft section 9, forcing it to rotate in an inclined position, at the same rate, and in constant engagement with the cylindrical part.

The rotation is caused by the following factors:
- the inclination causes one of the gears to be reduced with respect to the other and consequently causes the ratio of forces to change in favour of the reduced gear;
- the inclination causes the support point of the lever 15 on the shaft section to be displaced so that the internal part of the lever 15 on which the bearing is disposed acts with greater force;
- the resolution of the force on the bearing causes the annulus 12 to be impelled in the direction F7.

A rotation is generated between the levers and the inclined shaft, leading to a slippage between them with lateral dead points.

The engine power may be varied in correspondence with the inclination of the rotor and to the design of the levers, the ring and the shaft.

The aforesaid conditions are the result of a double resolution of the forces caused at the position of the levers 15 and the cylindrical rotor.

The breakdown of the forces and their resolution is shown in Fig. 6 and is detailed below:
The bearings 16 of the levers exert a force F4 on the ring 17. This force is cancelled by the engine centre.

F5 indicates the active rotation force which, because of the way in which the bearings bear on the ring 17, causes the lever to be impelled in the direction of the active rotation force F7. The active force F7 is the resultant of the forces F4 and F5, as in the case of a wheel rolling on an inclined plane.

The force F7 is transmitted over a distance by the point of incidence between the gear and the corresponding annulus 12.

F6 indicates the force compensated by the cylindrical gear.

F8 is the point of action of the resultant of the forces within the two gear wheels.

F9 is the point of action of the differential force on the lever 15 which is eccentric, so that the force F5 is greater than the force F6 and the force acting at F10 is greater than that acting at F11 (Fig. 1).

In this case, the force on the bearing and on the levers is resolved to give a return force on the cylindrical rotor.

The plural number of levers, their shape and their inclination are variable according to the construction of the engine.

The engine is made cylindrical, whereas it operates in a partially inclined configuration.

The engine according to the invention may be constructed as desired, with right-hand or left-hand rotation.

Naturally, the invention is not restricted to the embodiments described and illustrated herein, but may be widely varied and modified, particularly as regards construction, without departing from the guiding principle described above and claimed below.

## Claims

1. Rotary engine with recycled power, in which the drive shaft (1) carries on identical arms with equal angular spacing one or more auxiliary rotors, half of the axle (5, 9) of each rotor being parallel to the shaft while the other half is inclined towards the shaft, the halves being held together by a central joint (4), each auxiliary rotor carrying two gears (8, 10) of different diameters engaging with the corresponding annuluses, one of which is movable, all the rotors being interconnected kinematically and engaging with the two annuluses in such a way that the rotation of the shaft (1) results from the motion of each rotor which is virtually equivalent to rolling along the internal surface of the annuluses, so that, as a result of the thrust force of the moving annulus and the return force of the fixed annulus, each rotor, resolving this conflict, rotates upon itself and, by moving with respect to the annuluses, causes the drive shaft (1) to be put into axial rotation, the engine being of the type described in a previous patent No. 1228331 granted to the same holder, characterised in that each rotor carries, coaxially with the half-axle (5) parallel to the shaft (1), an annulus (12) which can rotate together with a shaft section (5) and on which are mounted a plurality of levers (15) which can oscillate about axes parallel to the shaft, bear tangentially at different points (P1) on a second inclined shaft section (9) of the rotor, and are orientated so that they are inclined towards the free end of the said inclined shaft section (9), while the free end of each of the said levers engages with a roller (16) rotatable about an axis parallel to the shaft (1), for example a bearing, inside a ring (17) whose axis is also parallel to the shaft (1), the rings (17) linked with the levers (15) of each rotor being connected in rotation to each other and to the shaft (1), in such a way that, as a result of the way in which each roller (16) bears on the internal surface of the ring (17), the forces are resolved into an active rotation force (F5, F7) and a zero force (F4, F6), pushing the shaft section (9) into an inclined position, keeping it constantly in engagement with the cylindrical part, and reducing its travel.

2. Engine according to Claim 1, characterised in that each lever (15) has a pin (14) engaged rotatably in the annulus (12) and a supporting pin (20) at the opposite end to which a bearing (16) is fixed by locking means (21).

3. Engine according to Claim 1 or 2, characterised in that the transverse section of the median part (115) of each lever (15) is wedge-shaped and tapers in the direction of the shaft section (9).

4. Engine according to one or more of the preceding claims, characterised in that it has a resolving action of the forces acting on the bearing (16), the levers (15) and the cylindrical rotor (12), with the following breakdown:
- (F4), the inactive radial force component caused by the way in which the bearing (16) bears on the ring (17), compensated by the engine centre;
- (F5), the active rotation force component derived from the way in which the bearing (16) bears on the ring (17);
- the thrust force (F7) of the lever, active for rotation, derived from the difference between the zero bearing force (F4) and the active bearing force (F5), which is transmitted over a distance by the point of incidence between the gear and the corresponding annulus;
- the inactive force component (F6) compensated by the cylindrical gear;
- the active resultant (F8) of the forces of the two gear wheels;
- the differential force (F9) on the levers (15) which is eccentric and causes the active force (F5) to overcome the inactive force (F6) and causes the force acting at (F10) to overcome the force acting at (F11).

5. Engine according to one or more of the preceding claims, characterised by an inclination of the shaft section (9), so that a gear wheel becomes smaller and therefore has a greater ratio with respect to the other, and the fulcrum of the lever (15) is displaced along the lever (15), giving a higher ratio of force on the bearing, which resolves this force and causes transmission through the lever to the yielding part of the cylindrical rotor, all of which causes rotation.

6. Engine according to one or more of the preceding claims, characterised in that there is an abnormal rotation between the levers (15) and the inclined shaft section (9), resulting in a slippage between them with lateral dead points.

7. Engine according to one or more of the preceding claims, characterised in that the centre C1, the conical centre C2, and the centre C3 of the ring (17) are found at the same height on the rotor.

8. Engine according to one or more of the preceding claims, characterised in that it has a plural number of levers (15), the shape and inclination being variable according to the construction of the engine.

9. Engine according to one or more of the preceding claims, characterised in that the inclination of the rotor is variable according to the size of the shaft, of the levers (15) and of the ring (17), causing a variation in the power of the engine.

10. Engine according to claims 1 to 9, characterised by the fact that the double resolution resulting from forces F4, F5, F6 and F7 can be used in many construction models until there is only one lever (15) for every rotor, assembled on the central shaft (1) using a pivot pin, passing alongside the inclined shaft (9) and terminates with bearing (16) inside the annulus (12). In this case forces F4 and F6 act on shaft (1) and forces F5 and F7 act on bearing (16) and directly inside the annulus (12) eliminating all the other levers, the ring (17) and relative supports.
